(19) Europäisches Patentamt
European Patent Office
Office européen des brevets

(11) Publication number: 0 003 489
B1

(12) **EUROPEAN PATENT SPECIFICATION**

(45) Date of publication of patent specification: **12.01.83**

(51) Int. Cl.³: **C 10 L 1/18,** C 10 M 1/28, C 08 F 210/02

(21) Application number: **78300755.2**

(22) Date of filing: **06.12.78**

(54) **Crude oil having improved cold flow properties.**

(30) Priority: **20.12.77 GB 5297177**

(43) Date of publication of application: **22.08.79 Bulletin 79/17**

(45) Publication of the grant of the patent: **12.01.83 Bulletin 83/2**

(84) Designated Contracting States: **BE CH DE FR GB IT LU NL SE**

(56) References cited:
**GB - A - 1 263 151**
**US - A - 3 669 189**
**US - A - 3 862 825**
**US - A - 3 947 368**

(73) Proprietor: **IMPERIAL CHEMICAL INDUSTRIES PLC**
**Imperial Chemical House Millbank**
**London SW1P 3JF (GB)**

(72) Inventor: **Gilby, Gordon William**
**2 The Ryde**
**Hatfield Hertfordshire (GB)**

(74) Representative: **James, David Gomer et al,**
**Imperial Chemical Industries PLC Legal Department: Patents Thames House North Millbank**
**London SW1P 4QG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 003 489 B1

# Crude oil having improved cold flow properties

The invention relates to a crude oil composition which has improved cold flow properties because of the addition of a selected copolymer of ethylene with vinyl acetate.

The use of copolymer of ethylene with vinyl acetate (known as EVA) is described in British patent specification 900 202 and 1 147 904. U.S. patent specification 3 669 189 describes and exemplifies Louisiana crude oil which contains from 5 to 100 ppm of an EVA containing 37 to 42% of vinyl acetate and exhibiting a melt index between 45 to 70 grams per 10 minutes.

U.K. patent specification 1 263 151 describes and claims a method of making EVA copolymers having molecular weights of 1000 to 2900 at 20 to 130°C and 700 to 10 000 psig (4928 to 69051 kPa using a catalyst having a half life of under 1 hour at 130°C. The use of the copolymers as pour point depressants is exemplified. The specification also states that the copolymers have less than 6 methyl terminating side branches per 100 methylene groups.

According to this invention a crude oil composition contains as additive to improve cold flow properties 0.005 to 1% by weight, based on the crude oil, of a copolymer of ethylene with vinyl acetate which:—

a) contains from 22 to 36 (preferably 25 to 33) % by weight of the copolymer of vinyl acetate,
b) has a melt flow index of 50 to 1000 (preferably 200 to 700) g/10 minutes as measured according to British Standard 2782:Part 1/105C/of 1976 using a 2.16 kg load, and
c) contains less than 14 (preferably 5 to 11) pendant methyl groups per 1000 carbon atoms of the copolymer as determined by nuclear magnetic resonance.

Pendant methyl groups are methyl groups which are attached to the carbon chain of the copolymer either directly or as part of a larger alkyl group which is itself attached directly to the chain.

Structure I illustrates a directly attached pendant methyl group.

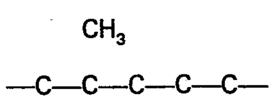

Structure II illustrates methyl groups attached as part of pendant butyl groups.

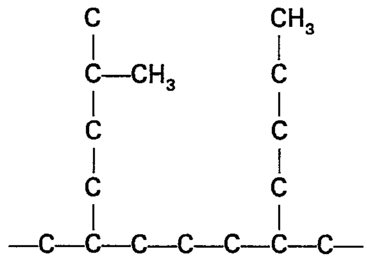

Preferably, at least 90% of the pendant methyl groups should be attached to the chain as part of larger alkyl groups, preferably as part of an alkyl group containing at least 4 carbon atoms. Reducing the number of pendant methyl groups appears to make the EVA copolymer more potent in its effect on the crystallisation of material in the oil and therefore improves the flow of the oil when cold.

The EVA copolymer may be conveniently made by a free-radical initiated copolymerisation of ethylene with vinyl acetate. Examples of such a process are given in Chapter 2 of the second edition of the book "Polythene", edited by A Renfrew and P Morgan and published in 1960 in London by Iliffe. Preferably, the EVA is made using a continuous stirred autoclave process carried out at a pressure of from 100 to 300 MN/m$^2$ and a temperature of from 120 to 250°C. If chain transfer agents are used in the copolymerisation, they are preferably hydrogen or alkanes, especially propane. The conditions of pressure, temperature and the concentration of chain transfer agent are adjusted to obtain the required melt flow index.

The EVA may be pumped into oil wells to reduce the tendency for crystallised waxes to impede the flow of crude oil from the well.

Concentrations of 0.001 to 10% (especially 0.005 to 1%) by weight of EVA on the weight of oil are preferred. However, masterbatches of EVA and oil containing much higher concentrations of EVA (e.g. up to 80%) may be used to facilitate dispersion of the EVA in an oil.

The invention is illustrated by the following Examples.

## Examples

Samples of crude oil from North Africa were each in turn heated to 90°C, held at that temperature for 2 minutes and then cooled to −60°C at a constant rate of cooling at 2°C per minute using the differential scanning calorimetry (DSC) technique. The temperature at which crystallisation commences ($T_s$) and at which the rate of crystallisation with respect to

time reaches a maximum ($T_c$) was noted and entered into Table 1. This procedure was carried out on a sample of oil containing no EVA (Comparative Example A), on samples of oil containing various concentrations (as set out in Table 1) of a commercially available EVA (Comparative Example B) and on samples of oil containing various concentrations (also set out in Table 1) of a preferred EVA (Example 1).

The commercially available EVA contained 28% by weight of copolymerised vinyl acetate, had a melt flow index of 400 g/10 minutes and contained 18.7 pendant methyl groups per 1000 carbon atoms of the copolymer. About 50% of the pendant methyl groups were attached directly to the copolymer chain and about 50% were attached as part of a larger alkyl group. The melting and crystallisation' characteristics of this EVA as determined by the DSC—160 test are set out in Table 2.

The preferred EVA also contained 28% by weight of copolymerised EVA and had a melt flow index of 400 g/10 minutes. The preferred copolymer contained only 8.8 pendant methyl groups per 1000 carbon atoms of the copolymer and over 90% of these were attached to the copolymer chain as part of an alkyl group containing at least four carbon atoms. The preferred EVA had been made by a free-radical initiated copolymerisation of ethylene and vinyl acetate carried out continuously in a stirred autoclave reactor using propane as a chain transfer agent.

Although the DSC is not necessarily a very sensitive test for assessing the improvement in cold flow properties in petroleum oils, it nevertheless indicates that crystallisation occurs at lower temperatures in the presence of the preferred EVA from which it can be deduced that the cold flow properties of the oil will be improved.

TABLE 1

| Example | Concentration of EVA % by weight | $T_s$ °C | $T_c$ °C |
|---|---|---|---|
| A | – | 53 | 50 |
| B | 0.001 | – | 49.5 |
| | 0.01 | 52.0 | 49.5 |
| | 0.25 | 52.5 | 49.5 |
| | 1.0 | 47.0 | 43.5 |
| 1 | 0.001 | 52.0 | – |
| | 0.01 | 51.0 | 49.0 |
| | 0.25 | 50.5 | 48.5 |
| | 1.0 | 45.0 | 42.5 |

TABLE 2

| EVA | $T_s$ °C | $T_c$ °C | $T_p$ °C | $T_m$ °C |
|---|---|---|---|---|
| Commercial EVA | 49.0 | 39.0 | 60.0 | 81.0 |
| Preferred EVA | 57.0 | 49.5 | 70.5 | 85.0 |

**Claims**

1. A crude oil composition which contains as additive to improve the cold-flow properties, 0.005 to 1% by weight, based on the crude oil, of a copolymer of ethylene with vinyl acetate which:

a) contains 22 to 36% by weight of vinyl acetate based on the weight of the copolymer,
b) has a melt flow index of 50 to 1000 g/10 minutes as measured according to British Standard 2782:Part 1/105C of 1976 using a 2.16 kg load, and
c) contains less than 14 pendant methyl groups per 1000 carbon atoms of the copolymer as determined by nuclear magnetic resonance.

2. A crude oil composition according to claim 1, wherein the copolymer has a melt flow index of 50 to 700.

3. A crude oil composition according to claim 2, wherein the copolymer has a melt flow index of 200 to 700.

4. A crude oil composition according to claim 1, claim 2 or claim 3, wherein the copolymer contains 5 to 11 pendant methyl groups per 1000 carbon atoms of the copolymer.

**Revendications**

1. Composition de pétrole brut renfermant, comme additif pour améliorer les propriétés d'écoulement à froid de 0,005 à 1% en poids, sur la base du pétrole brut, d'un copolymère d'éthylène et d'acétate de vinyle qui:

a) renferme de 22 à 36% en poids d'acétate de vinyle sur la base du poids du copolymère,
b) a un indice de fluidité en fusion de 50 à 1000 g/10 minutes, mesuré suivant la norme britannique 2782:Partie 1/105C de 1976 en utilisant une charge de 2,16 kg, et
c) renferme moins de 14 groupes méthyle pendants pour 1000 atomes de carbone du copolymère, déterminé par résonance magnétique nucléaire.

2. Composition de pétrole brut suivant la revendication 1, caractérisée en ce que le copolymère a un indice de fluidité en fusion de 50 à 700.

3. Composition de pétrole brut suivant la revendication 2, caractérisée en ce que le copolymère a un indice de fluidité en fusion de 200 à 700.

4. Composition de pétrole brut suivant la revendication 1, 2 ou 3, caractérisée en ce que le copolymère renferme de 5 à 11 groupes méthyle pendants pour 1000 atomes de carbone du copolymère.

**Patentansprüche**

1. Rohölzusammensetzung, enthaltend als Zusatzstoff für die Verbesserung des Kaltfließverhaltens bzw. des Fließvermögens in der Kälte 0,005 bis 1 Gew.-%, auf das Rohöl bezogen, eines Copolymerisats von Ethylen mit Vinylacetat, das

a) 22 bis 36 Gew.-% auf das Gewicht des Copolymerisats bezogen, Vinylacetat enthält,
b) einen Schmelzindex (gemessen nach British Standard 2782:Part 1/105C von 1976 unter Anwendung einer Belastung von 2,16 kg) con 50 bis 1000 g/10 min hat und
c) pro 1000 Kohlenstoffatome des Copolymerisats gemäß der Bestimmung durch NMR-Spektroskopie weniger als 14 Methylgruppen enthält, die an der Kohlenstoffkette des Copolymerisats direkt oder als Teil einer größeren, selbst direkt an der Kohlenstoffkette hängenden Alkylgruppe hängen.

2. Rohölzusammensetzung nach Anspruch 1, worin das Copolymerisat einen Schmelzindex von 50 bis 700 hat.

3. Rohölzusammensetzung nach Anspruch 2, worin das Copolymerisat einen Schmelzindex von 200 bis 700 hat.

4. Rohölzusammenzetzung nach Anspruch 1, 2 oder 3, worin das Copolymerisat pro 1000 Kohlenstoffatome des Copolymerisats 5 bis 11 Methylgruppen enthält, die an der Kohlenstoffkette des Copolymerisats direkt oder als Teil einer größeren, selbst direkt an der Kohlenstoffkette hängenden Alkylgruppe hängen.